# FASCICULE DE BREVET EUROPEEN

(11) **EP 3 589 503 B1**
(45) Date de publication et mention de la délivrance du brevet: **19.05.2021**
(21) Numéro de dépôt: 18714819.2
(22) Date de dépôt: 02.03.2018
(51) Int. Cl.: B60C 11/03, B60C 11/12

(54) **BANDE DE ROULEMENT DE PNEU POUR VEHICULE REMORQUE POIDS LOURD**
REIFENLAUFFLÄCHE FÜR EINEN LKW-ANHÄNGER
TYRE TREAD FOR HGV TRAILER

(30) Priorité: 03.03.2017 FR 1770212
(43) Date de publication de la demande: 08.01.2020
(73) Titulaire: Compagnie Générale des Etablissements Michelin, 63000 Clermont-Ferrand (FR)
(72) Inventeur: DAYET, Patrick, 63040 Clermont-Ferrand Cedex 9 (FR); BUFFETAUD, Benoit, 63040 Clermont-Ferrand Cedex 9 (FR); BABAUD, Jacques, 63040 Clermont-Ferrand Cedex 9 (FR)
(74) Mandataire: Millanvois, Patrick Jacques Jean
(86) Numéro de dépôt international: PCT/FR2018/050482
(87) Numéro de publication internationale: WO 2018/158546

(56) Documents cités:
- WO-A1-2015/114129
- FR-A1- 2 995 253

## Description

### DOMAINE DE L'INVENTION

La présente invention concerne les pneus pour véhicules poids lourd et plus particulièrement les pneus destinés à équiper les essieux porteurs des véhicules de type remorque à deux ou trois essieux. Elle concerne encore plus spécifiquement le dessin de sculpture de la bande de roulement de tels pneus pour améliorer l'usure de ce type de pneus.

### ÉTAT DE LA TECHNIQUE

Un pneu pour véhicule poids lourd comprend des bourrelets destinés à être en contact avec une jante de montage, ces bourrelets se prolongeant radialement vers l'extérieur par des flancs eux mêmes se raccordant de part et d'autre d'une partie de sommet, cette dernière étant recouverte par une bande de roulement dont la fonction est d'assurer le contact du pneu avec la route pendant le roulage.

De tels pneus comprennent une armature de carcasse ancrée dans les bourrelets, cette armature s'étendant dans les flancs jusqu'au sommet du pneu. Cette armature de carcasse, formée d'une ou plusieurs couches renforcées, est surmontée radialement vers l'extérieur dans la partie de sommet du pneu par une armature de sommet elle-même constitué d'une pluralité de couches renforcées.

La bande de roulement d'un pneu a une épaisseur adaptée et est en outre pourvue d'un dessin de sculpture pour un usage donné. Ce dessin de sculpture est formé d'éléments de relief délimités par des rainures, incisions et de façon générale par des découpures.

Définitions :

Une direction radiale sur un pneu désigne une direction qui est perpendiculaire à l'axe de rotation du pneu.

Une direction axiale ou direction transversale désigne une direction qui est parallèle à l'axe de rotation du pneu.

Une direction circonférentielle désigne une direction qui est tangente à tout cercle centré sur l'axe de rotation du pneu.

Une découpure désigne indistinctement soit une rainure soit une incision formée dans une bande de roulement.

Une rainure désigne l'espace formé dans une bande de roulement entre des parois de matière sur une profondeur au plus égale à l'épaisseur de la bande, ces parois de matière ne venant pas en contact l'une sur l'autre dans les conditions usuelles de roulage du pneu.

Une incision désigne l'espace formé dans une bande de roulement entre des parois de matière sur une profondeur au plus égale à l'épaisseur de la bande, lesdites parois étant aptes à venir, au moins en partie, en contact l'une contre l'autre dans des conditions usuelles de roulage du pneu.

Un canal désigne une cavité formée dans une bande de roulement, ce canal ayant une section de largeur maximale et de hauteur maximale. Un canal peut être connecté à au moins un autre canal pour former un réseau d'écoulement de fluide circulant à l'intérieur de la bande de roulement. De même, un canal peut être relié à une incision. Un canal peut également être formé pour s'ouvrir sur la surface de roulement d'une bande de roulement et se prolonger dans l'épaisseur de cette bande.

Un élément de relief désigne un bloc ou une nervure. Un élément de relief est délimité par des rainures et présente une face de contact, cette face étant destinée à venir en contact avec la chaussée pendant le roulage, et des faces latérales coupant la face de contact selon des arêtes. Une nervure circonférentielle est un élément de relief faisant le tour complet du pneu.

La surface de roulement d'une bande de roulement désigne l'ensemble des faces de contact de tous les éléments de relief d'une bande de roulement.

Parmi les véhicules poids lourd on distingue des remorques comportant plusieurs essieux non directionnels *("non steered axles"* en anglais), c'est-à-dire ne comportant qu'une seule orientation des ensembles pneu/roue montés sur ces essieux. Ces pneus ne peuvent donc pas être braqués pour effectuer des manœuvres de virage. On observe depuis longtemps un problème lié à la cinématique de prise de virage pour chacun desdits essieux. Si l'un des essieux peut suivre tangentiellement une trajectoire circulaire, il ne peut en être de même pour les autres essieux. Il s'ensuit une usure irrégulière plus prononcée pour les pneus de ces essieux que pour ceux de l'essieu dont les pneus suivent une trajectoire circulaire. Par usure irrégulière, on entend une usure qui n'est pas uniforme et régulière sur toute la surface de roulement de la bande de roulement d'un pneu. Cette usure peut induire un retrait prématuré dudit pneu. Tout se passe comme si les pneus des essieux ne suivant pas une trajectoire circulaire étaient soumis à une dérive induite provoquant un glissement sur la chaussée et un frottement des bandes de roulement sur la chaussée et par conséquent une usure plus prononcée.

Ce problème est bien connu et plusieurs solutions ont déjà été proposées.

Le brevet US-5622575 propose une bande de roulement dont le dessin de sculpture est asymétrique, une partie interne destinée à être positionnée vers l'intérieur du châssis du véhicule est pourvue de rainures circonférentielles et d'incisions orientées transversalement et obliquement, une autre partie externe destinée à être positionnée vers l'extérieur du véhicule est dépourvue de rainures et d'incisions. Cette dernière partie comprend une pluralité de cavités disposées selon des lignes circonférentielles.

Le brevet US-4905748 propose un dessin de sculpture spécifique combiné à des rayons de courbure différents de part et d'autre du plan médian de la bande de roulement, ce dessin de sculpture comprenant des rainures de largeurs plus étroites côté externe comparativement aux rainures situées côté interne.

Si ces solutions apportent une amélioration sur le plan de l'usure irrégulière, il se trouve que pour les pneus montés sur essieux ne suivant pas une trajectoire circulaire, la partie externe de ces pneus (c'est-à-dire la partie axialement à l'extérieur de leur bande de roulement) est soumise à un fort glissement par rapport à la chaussée, ce qui se traduit par une usure plus prononcée sur cette partie axialement à l'extérieur.

Le document US-9022083 combine des canaux cachés surmontés d'incisions se croisant pour former un réseau ; des canaux radiaux sont formés aux intersections des incisions pour s'ouvrir sur la surface de roulement et se prolonger dans l'épaisseur de la bande de roulement.

Les documents FR 2940185 A1**,** FR2995253 A1**,** FR 2972962 A1 et WO 2015/114129 A1 décrivent également des pneus de l'art antérieur à la présente invention.

### BREF EXPOSÉ DE L'INVENTION

Un objectif de l'invention est d'améliorer la performance en usure d'une bande de roulement des pneus équipant les essieux ne suivant pas de façon tangentielle une trajectoire circulaire tout en conservant un niveau d'adhérence adéquat à cette bande de roulement tout au long de son utilisation.

Dans ce but, la bande de roulement d'un pneu pour véhicule poids lourd destiné à équiper une remorque de poids lourd comprend des bourrelets destinés à être en contact avec une jante, ces bourrelets se prolongeant radialement vers l'extérieur par des flancs eux-mêmes se raccordant de part et d'autre d'une partie de sommet, cette partie de sommet étant recouverte radialement à l'extérieur par une bande de roulement ayant une longueur et une épaisseur E de matière à user déterminant une limite d'usure et ayant une surface de roulement pour venir au contact d'une chaussée en roulage. Ce pneu comprend une armature de carcasse ancrée dans les bourrelets et s'étendant dans les flancs et dans la partie de sommet, la partie de sommet du pneu comprenant une armature de sommet.

La bande de roulement de l'invention comprend une partie centrale et des parties de bord, ces parties de bord délimitant axialement la partie centrale.

Cette bande de roulement est pourvue dans sa partie centrale et de part et de d'autre de son plan médian d'une pluralité d'incisions, cette pluralité d'incisions comprenant au moins une incision circonférentielle et des incisions transversales, ces dernières incisions transversales comprenant une première série d'incisions latérales et une deuxième série d'incisions latérales, chacune de ces séries d'incisions latérales comprenant une première extrémité proche du plan médian et une deuxième extrémité axialement à l'extérieur, les deuxièmes extrémités des incisions latérales délimitant axialement la partie centrale de la bande de roulement. Chaque incision latérale s'ouvre à sa première extrémité dans une incision circonférentielle.

Par ailleurs toutes les incisions de la partie centrale de la bande de roulement s'étendent dans la bande de roulement sur une profondeur au moins égale à 60% de l'épaisseur E de matière à user et sont prolongées à l'intérieur de la bande de roulement par des canaux cachés de dimensions appropriées pour compléter le réseau d'écoulement continu sous la surface de roulement à neuf, ces canaux cachés étant destinés à former des rainures après une usure partielle prédéterminée.

Cette bande de roulement est telle qu'elle est totalement dépourvue de toute rainure dans sa partie centrale, cette dernière ayant une largeur au moins égale à 40% et au plus 90% de la largeur totale W de la bande de roulement. En outre, les incisions latérales formées dans la partie centrale de la bande de roulement débouchent à leur deuxième extrémité dans un canal d'extrémité ouvert sur la surface de roulement de la bande de roulement et se prolongeant dans l'épaisseur de ladite bande jusqu'à rejoindre un canal caché en fond d'incision et générer ainsi un réseau d'écoulement fluidique continu entre tous les canaux qu'ils soient latéraux ou cachés.

Ainsi, il est possible d'ajuster au mieux les rigidités locales et rigidité globale de la bande en réglant la largeur de la partie centrale pour conserver un grand volume de matière. La position de montage des pneus pourvus de telles bandes de roulement sur les véhicules poids lourd de type remorque autorise l'emploi de ce type de bande de roulement que l'on peut qualifier de relativement compacte. Par relativement compacte, il faut entendre ici que le rapport de la surface des creux sur une surface totale de roulement, cette dernière incluant à la fois la surface de la matière et la surface des creux, est faible et plus spécifiquement au plus égal à 7%.

Les incisions d'orientation transversales doivent être considérées dans la présente invention comme étant parallèles à la direction axiale du pneu ou bien comme faisant un angle moyen non nul avec la direction axiale (dans ce cas elles peuvent être qualifiées comme étant obliques).

Des découpures (rainure, incision) circonférentielles s'étendent sur toute la longueur de la bande de roulement pour faire le tour du pneu.

Toutes les incisions, qu'elles soient circonférentielles ou transversales, peuvent prendre des géométries rectilignes ou non et avoir dans l'épaisseur de la bande des inclinaisons non nulles par rapport à la direction perpendiculaire à la surface de roulement. Ces mêmes incisions peuvent avoir des géométries appropriées pour réaliser un blocage mécanique des parois en vis-à-vis les délimitant.

L'épaisseur de matière à user E correspond le plus souvent à la distance séparant la surface de roulement à neuf de la bande de roulement aux points des incisions ou canaux les plus à l'intérieur de la bande.

Grâce à ce dessin de sculpture, il est possible de conserver une très grande rigidité à la bande de roulement, à la fois sur ses bords et dans sa partie centrale tout en préservant un bon niveau de performance en roulage sur chaussée revêtue d'eau, les canaux d'évacuation de l'eau connectés à la surface de roulement tout en étant formés sous la surface de roulement à neuf.

Préférentiellement, les canaux d'extrémité ont une section comprise entre la section d'un disque de diamètre égal à 15 % de la largeur Lb de chaque bord et la section d'un disque de diamètre égal à 25 % de la largeur de chaque bord.

Avantageusement, la partie centrale a une largeur au moins égale à 60 % et encore plus avantageusement au moins égale à 80 % de la largeur totale W de la bande de roulement.

Dans une variante préférentielle de l'invention, les parties de bord sont dépourvus de découpures circonférentielles que ce soit des rainures ou encore des incisions. Ces parties de bord peuvent être considérées comme des parties « lisses » ou pleines, leur taux de creux volumique étant égal à 0%.

Cette dernière variante se distingue de l'art antérieur rappelé plus haut par l'absence à l'état neuf de toute rainure s'ouvrant sur la surface de roulement que ce soit sur la partie centrale et sur les parties de bord.

Avantageusement, le taux de creux volumique à neuf de la partie centrale est au moins égal à 6% et au plus égal à 9% ; ce taux de creux volumique est évalué sur le pneu non gonflé entre la surface de roulement et une surface parallèle à la surface de roulement et passant par les points les plus à l'intérieur de la cavité (incision ou canal caché) la plus profonde. Avantageusement, le taux de creux surfacique de la partie centrale est à neuf au moins égal à 2% et au plus égal à 6%.

Le dessin de sculpture proposé permet d'avoir à la fois une grande rigidité mécanique sur les bords de la bande de roulement grâce à l'absence de toute découpure transversale tout en limitant la perte de rigidité à la partie centrale de la bande grâce au fait que les incisions se ferment au point d'avoir leurs parois en vis-à-vis en contact au moins partiel lors du passage dans la région de contact avec la chaussée. Ces incisions permettent de générer des arêtes utiles pour atteindre une bonne performance en adhérence. En outre, la présence de canaux d'extrémité formés à la frontière entre la partie centrale et chaque partie de bord permet d'assurer une capture de l'eau présente par temps de pluie sur cette zone ce qui est favorable à une bonne adhérence et à une ventilation thermique des parties de bord du pneu lors de manœuvres de roulage.

On peut ainsi obtenir à la fois :

- une amélioration des performances en usure et en régularité d'usure, notamment en augmentant la quantité de matière venant au contact avec la chaussée,

- une meilleure résistance aux sollicitations latérales exercées sur le pneumatique (par exemple sollicitation de ripage que l'on constate sur des multi essieux en braquage sur des cercles de petits rayons),

- une adhérence satisfaisante sur chaussée revêtue d'eau pour le type d'usage concerné.

Avantageusement, les deuxièmes extrémités des incisions de la première série d'incisions latérales sont déphasées circonférentiellement des deuxièmes extrémités des incisions de la deuxième série d'incisions latérales de façon à ne pas rentrer dans le contact avec la chaussée en même temps.

Dans une variante de l'invention, les incisions transversales ou obliques sont toutes inclinées dans la profondeur de la bande de roulement par rapport à la direction radiale avec un même angle moyen au plus égal à 25 degrés et préférentiellement compris entre 0 degrés et 10 degrés. Grâce à cette inclinaison, on réalise une meilleure fermeture des incisions au passage dans le contact avec la chaussée.

Dans une autre variante de l'invention, la bande de roulement est pourvue de canaux additionnels ouvert sur la surface de roulement et s'enfonçant dans l'épaisseur de la bande, ces canaux additionnels pouvant être avantageusement localisés dans le plan médian équatorial. Ces canaux additionnels ont des dimensions appropriées et sont connectés aux autres canaux cachés afin de former un réseau continu de canaux.

La densité d'incisions ouvertes sur la surface de roulement à neuf est telle qu'en surface de la bande de roulement le plus grand diamètre d'un disque ne coupant aucune incision est au plus égal à 14 mm.

Grâce à cette structure de bande de roulement, il est possible de réduire l'épaisseur de matière entre l'armature de sommet et les canaux les plus à l'intérieur dans la bande de roulement, ce qui est bénéfique pour réduire le niveau température atteint dans les matériaux lors du roulage. Les très faibles taux de creux surfacique et volumique permettent de protéger plus efficacement l'armature de sommet contre la corrosion et ainsi de diminuer le taux de refus au rechapage.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 montre une vue partielle d'une variante d'une bande de roulement selon l'invention, cette variante comprenant quatre incisions longitudinales ;

La figure 2 montre une deuxième variante de bande de roulement selon l'invention pour laquelle les incisions transversales sont toutes inclinées d'un angle moyen non nul par rapport à un plan perpendiculaire à la surface de roulement ;

La figure 3 montre une troisième variante de bande de roulement selon l'invention.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

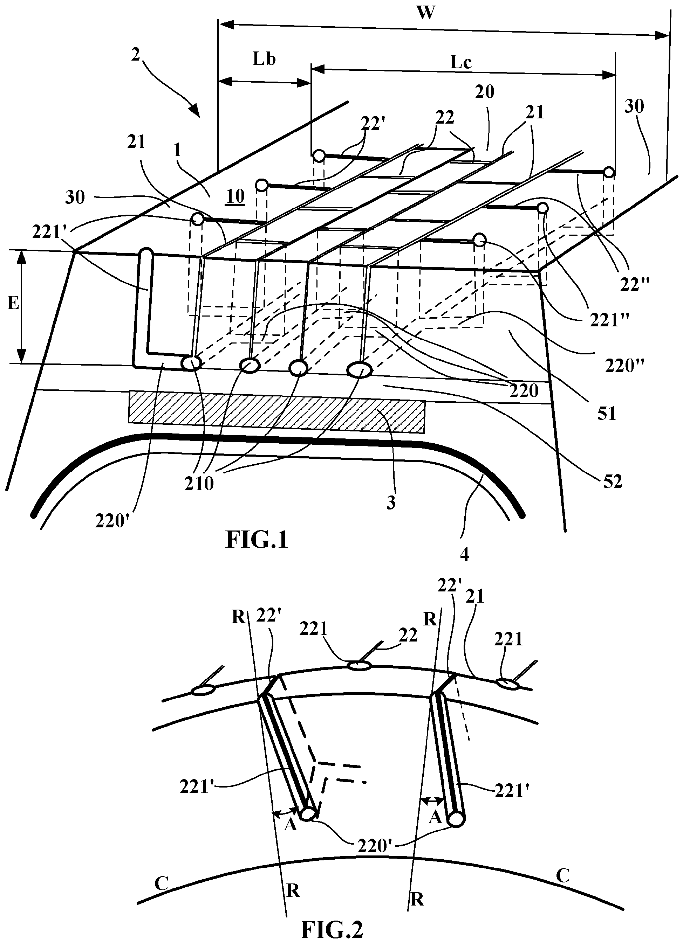

Sur la figure 1, on voit une partie d'un pneu 2 de dimension 385/65 R 22.5 destiné à équiper une remorque de poids lourd, ce pneu comprenant une armature de carcasse 4 surmontée radialement à l'extérieur par une armature de sommet 3. Ce pneu 2 comprend en outre une bande de roulement 1 formée selon l'invention. Cette bande de roulement 1 a une largeur totale W qui correspond à la largeur moyenne de l'empreinte de contact du pneu avec une chaussée, cette empreinte étant obtenue pour des conditions d'usage du pneu à vitesse nulle. Cette largeur W est, dans le cas présenté, égale à 310 mm.

La bande de roulement 1 est formée d'une couche 51 composée d'un seul matériau, cette couche 51 ayant une épaisseur totale E, égale à 14.3 mm, correspondant à l'épaisseur qui peut être usée pendant toute la durée d'usage d'un pneu pourvu avec cette bande jusqu'à atteindre une limite d'usure fixée au préalable. Cette bande de roulement 1 est disposée radialement sur l'extérieur d'une couche intermédiaire 52 (« *undertread »* en anglais), cette couche intermédiaire 52 étant placée radialement sur l'armature de sommet 3 pour en quelque sorte protéger cette armature de sommet. Cette couche intermédiaire est, en règle générale, choisie pour avoir des caractéristiques de faible hystérèse afin de limiter les pertes et abaisser le niveau de température en fonctionnement. Cette couche intermédiaire 52 n'est *a priori* pas destinée à être exposée au contact avec la chaussée, ce qui se traduit par le fait que le pneu doit être retiré du véhicule avant que l'usure atteigne cette couche intermédiaire.

La bande de roulement 1 comprend radialement à l'extérieur une surface de roulement 10 destinée à venir en contact avec une chaussée lors du roulage.

Comme on le voit sur cette figure 1, cette première variante de bande de roulement est totalement dépourvue de toute rainure s'ouvrant sur la surface de roulement 10 à neuf.

Par ailleurs, la bande de roulement 1 comprend des parties de bord 30 totalement dépourvues de tout creux (rainure, incision) et axialement entre ces parties de bord 30 on trouve une partie centrale 20 sur laquelle sont formées toutes les découpures. La partie centrale 20 est pourvue de quatre incisions circonférentielles 21 et d'une pluralité d'incisions transversales 22, 22', 22", les incisions transversales étant formées dans des plans radiaux c'est à dire des plans passant par l'axe de rotation du pneu. Les incisions transversales et les incisions circonférentielles sont toutes, dans la présente variante, perpendiculaires à la surface de roulement 10.

Entre les incisions circonférentielles 21, il est formé une pluralité d'incisions transversales 22 disposées de manière régulière dans la direction circonférentielle avec un pas égal à 28 mm (soit 0.8% du périmètre du pneu mesuré à neuf sur son plan médian équatorial). Axialement à l'extérieur des incisions circonférentielles 22 les plus à l'extérieur de la partie centrale, il est formé une première série d'incisions transversales 22' et une deuxième série d'incisions transversales 22", une de chaque côté du plan médian XX', ces incisions transversales 22', 22" sont disposées dans la direction circonférentielle selon un pas égal à 42 mm (soit 1.25% du périmètre du pneu mesuré à neuf sur son plan médian équatorial).

Chaque incision de ces séries d'incisions latérales 22', 22" comprend une première extrémité proche du plan médian et une deuxième extrémité située axialement à l'extérieur par rapport à la première extrémité, la distance séparant les deuxièmes extrémités des incisions latérales 22', 22" délimitant axialement la largeur Lc de la partie centrale de la bande de roulement. Chaque incision latérale 22', 22" s'ouvre à sa première extrémité dans une incision circonférentielle 21.

Les incisions circonférentielles 21 et les incisions transversales 22, 22', 22" forment un réseau interconnecté permettant une circulation fluidique. Les incisions circonférentielles et les incisions transversales ont, sur le pneu neuf, une largeur moyenne inférieure à 1.0 mm.

Les incisions circonférentielles 21 s'étendent dans la profondeur jusqu'à une profondeur égale à 9.3 mm (soit 65% de l'épaisseur E de matière à user) et sont prolongées radialement à l'intérieur par un canal 210 de forme elliptique en section de dimensions égales à 7 mm et 5 mm selon respectivement son grand axe et son petit axe (le petit axe étant orienté suivant la direction de l'épaisseur de la bande). De même, les incisions transversales 22 reliées aux incisions circonférentielles 21 sont prolongées radialement sur l'intérieur par un canal 220 de même forme elliptique vue en section et de dimensions 4 mm et 3.5 mm selon respectivement son grand axe et son petit axe (le petit axe étant orienté suivant la direction de l'épaisseur de la bande).

Les incisions transversales 22', 22" sont prolongées radialement à l'intérieur par des canaux 220', 220" orientés transversalement, lesdits canaux 220' et 220" ayant des sections identiques à celles des canaux 220 prolongeant les incisions circonférentielles 22 axialement les plus à l'intérieur. Ces canaux 220', 220" s'ouvrent dans les canaux 210 prolongeant les incisions circonférentielles 21 axialement les plus à l'extérieur.

Ces mêmes incisions transversales 22', 22" sont prolongées par des canaux d'extrémité 221', 221", respectivement, s'étendant en direction radiale en suivant l'incision 22', 22" jusqu'à rejoindre un canal 220', 220" formé radialement au fond de l'incision 22', 22" respectivement.

Les canaux d'extrémité 221', 221" ont une section de forme circulaire de diamètre égal à 4 mm et jouent un rôle essentiel dans le bon fonctionnement de la bande de roulement en condition de virage.

On voit sur cette figure 1 que les canaux d'extrémité 221', 221" formés de chaque côté de la partie centrale 20 sont déphasés circonférentiellement de manière à ne pas rentrer dans le contact avec la chaussée en même temps.

La largeur Lc de la partie centrale est mesurée comme la distance entre les canaux d'extrémité 221' situés de part et d'autre de la partie centrale. Cette largeur est ici égale à 266 mm soit un peu plus de 85% de la largeur W de la bande de roulement.

Il est utile de noter que les canaux 221, 220, 220', 220" sont destinés à former de nouvelles rainures après une usure partielle de la bande de roulement ; par ailleurs, de par leurs dimensions et leur localisation dans la bande de roulement ces canaux n'affectent que très faiblement les rigidités de cette bande de roulement. Ils ont essentiellement pour rôle celui de faciliter l'écoulement fluidique dans le réseau formé par les incisions et lesdits canaux.

La partie centrale 20 est prolongée axialement par des parties de bord 30 de largeur Lb, égale ici à 22 mm, totalement dépourvues de toute découpure dans cette variante.

Le taux de creux volumique de cette variante pour la partie centrale est égal à environ 8% et son taux de creux surfacique égal à 5%.

Ainsi, il est possible de réaliser un dessin de sculpture d'une bande de roulement de pneu poids lourd pour véhicule de type remorque dépourvue à neuf de rainure circonférentielle ou transversale mais comprenant des canaux ouverts sur la surface de roulement, en nombre suffisant pour assurer un drainage de l'eau présente sur la chaussée. Ce dessin de sculpture compacte par son taux de creux volumique faible (compris entre 6% et 9%) est particulièrement intéressant car il conserve des arêtes utiles pour bénéficier d'une motricité adéquate tout en maximisant la quantité de matière en contact avec la chaussée.

Dans une autre variante intéressante non représentée ici, les canaux cachés prolongeant les incisions circonférentielles et transversales peuvent être en partie ou en totalité formés dans la couche intermédiaire 52 située entre la bande de roulement 1 et l'armature de sommet 3.

Sur la figure 2, on voit une partie d'une bande de roulement 1 selon une autre deuxième variante de l'invention. Dans cette deuxième variante, les incisions transversales 22, 22' sont toutes inclinées d'un même angle A par rapport à un plan perpendiculaire à la surface de roulement (ce plan a une trace indiquée par la ligne RR sur cette figure 2), cet angle A étant dans le cas montré égal à 15 degrés. La direction CC portée sur cette figure indique la direction circonférentielle.

Dans cette variante, les canaux d'extrémité 221' s'enfoncent dans l'épaisseur de la bande de roulement et suivent le trajet des incisions transversales 22' et sont donc inclinés avec un angle de 15 degrés par rapport à un plan perpendiculaire à la surface de roulement. En outre, il est moulé des canaux additionnels 221 en extrémité des incisions transversales 22 formées entre les incisions circonférentielles 21.

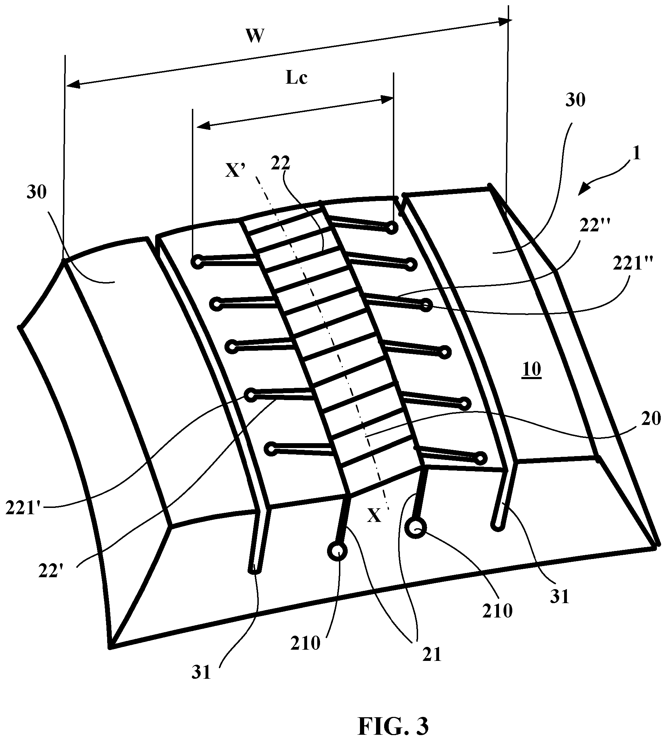

La figure 3 montre une vue partielle d'une troisième variante de bande de roulement selon l'invention. Dans cette variante, la bande de roulement 1 a une largeur totale W et comprend radialement à l'extérieur une surface de roulement 10 destinée à venir en contact avec une chaussée lors du roulage.

Cette bande de roulement comprend une partie centrale dont la largeur Lc est déterminée par les extrémités des canaux radiaux 221', 221" formés aux extrémités axiales d'incisions obliques 22', 22" axialement les plus à l'extérieur. Ces incisions obliques 22', 22" débouchent à leur autre extrémité dans deux incisions circonférentielles 21. Entre les deux incisions circonférentielles 21, il est formé une pluralité d'incisions obliques 22 d'inclinaison opposée à celle des incisions obliques 22', 22" axialement à l'extérieur.

Comme présenté avec la première variante, les incisions qu'elles soient circonférentielles 21 ou obliques 22, 22', 22" sont prolongées radialement à l'intérieur par des canaux cachés destinés à former de nouvelles rainures après une usure partielle prédéterminée.

Les incisions circonférentielles 21 et les incisions transversales 22, 22', 22" sont interconnectées les unes aux autres pour former un réseau. Les incisions circonférentielles et les incisions transversales ont, sur le pneu neuf, des largeurs moyennes appropriées pour permettre la mise en contact au moins partielle des parois les délimitant lors du passage dans le contact avec la chaussée.

On voit sur cette figure 1 que les canaux d'extrémité 221', 221" sont déphasés entre les deux bords de la partie centrale 20 de manière à ne pas rentrer dans le contact en même temps.

Axialement à l'extérieur des limites de la partie centrale 20, on trouve des parties de bord 30 totalement dépourvues de toute découpure orientée transversalement ou obliquement. Ces parties de bord 31 sont toutefois chacune pourvue avec une rainure circonférentielle 31 dont la profondeur maximale correspond au fond des cavités cachées formées dans la partie centrale de la bande de roulement.

L'invention décrite avec le support de ces variantes ne doit pas être limitée à ces variantes et diverses modifications peuvent y être apportées sans sortir de son cadre. Notamment les incisions peuvent avoir des formes zigzagantes que ce soit dans la profondeur ou bien en surface de roulement.

## Revendications

1. Bande de roulement (1) d'un pneu destiné à équiper une remorque de poids lourd, cette bande de roulement ayant une épaisseur E de matière à user déterminant une limite d'usure et ayant une surface de roulement (10) pour venir au contact d'une chaussée, cette bande de roulement étant divisée en une partie centrale (20) et des parties de bords (30) de chaque côté de la partie centrale, les parties de bord (30) étant dépourvues de toute découpure transversale, la partie centrale (20) étant pourvue d'un dessin de sculpture dépourvu de toute rainure circonférentielle, une rainure étant un espace formé dans la bande de roulement entre des parois de matière sur une profondeur au plus égale à l'épaisseur de la bande, ces parois de matière ne venant pas en contact l'une sur l'autre dans les conditions usuelles de roulage du pneu, ce dessin de sculpture comprenant une pluralité d'incisions, une incision étant un espace formé dans une bande de roulement entre des parois de matière sur une profondeur au plus égale à l'épaisseur de la bande, lesdites parois étant aptes à venir, au moins en partie, en contact l'une contre l'autre dans des conditions usuelles de roulage du pneu, cette pluralité d'incisions comprenant au moins une incision circonférentielle (21) et des incisions transversales (22, 22', 22"), ces dernières incisions transversales incluant une première série d'incisions latérales (22') et une deuxième série d'incisions latérales (22"), chacune de ces séries d'incisions latérales (22', 22") comprenant une première extrémité proche du plan médian de la bande de roulement et une deuxième extrémité axialement à l'extérieur de la première extrémité, les deuxièmes extrémités des incisions latérales (22', 22") délimitant axialement la partie centrale de la bande de roulement, chaque incision latérale (22', 22") s'ouvrant à sa première extrémité dans une incision circonférentielle (21), toutes les incisions (21, 22) de la partie centrale de la bande de roulement s'étendant dans la bande de roulement sur une profondeur au moins égale à 60% de l'épaisseur E de matière à user et étant prolongées à l'intérieur de la bande de roulement par des canaux cachés (210, 220) de dimensions appropriées pour compléter le réseau d'écoulement continu sous la surface de roulement à neuf (10), ces canaux cachés (210, 220) étant destinés à former des rainures après une usure partielle prédéterminée, cette bande de roulement (1) étant **caractérisée en ce qu'**elle est totalement dépourvue de toute rainure dans sa partie centrale (20), cette partie centrale ayant une largeur Lc au moins égale à 40% et au plus 90% de la largeur totale W de la bande de roulement, et **en ce que** les incisions latérales (22', 22") formées dans la partie centrale de la bande de roulement débouchent à leur deuxième extrémité dans un canal d'extrémité (221', 221") ouvert sur la surface de roulement de la bande de roulement et se prolongeant dans l'épaisseur de ladite bande jusqu'à rejoindre un canal caché (220', 220") en fond d'incision et générer ainsi un réseau d'écoulement fluidique continu entre tous les canaux qu'ils soient des canaux d'extrémité (221', 221") ou cachés (210, 220, 220', 220").

2. Bande de roulement selon la revendication 1 **caractérisée en ce que** la partie centrale (20) a une largeur Lc au moins égale à 80 % de la largeur totale W de la bande de roulement.

3. Bande de roulement selon la revendication 1 ou la revendication 2 **caractérisée en ce que** le taux de creux surfacique de la bande de roulement à neuf est au plus égal à 7%.

4. Bande de roulement selon l'une quelconque des revendications 1 à 3 **caractérisée en ce que** les canaux d'extrémité (221', 221") ont une section comprise entre la section d'un disque de diamètre égal à 15 % de la largeur Lb de chaque bord (30) et la section d'un disque de diamètre égal à 25 % de la largeur Lb de chaque bord (30).

5. Bande de roulement selon la revendication 4 **caractérisée en ce que** le taux de creux volumique à neuf de la partie centrale (20) est choisi pour être au moins égal à 6% et au plus égale à 9% et le taux de creux surfacique est à neuf au moins égal à 2% et au plus égal à 6%.

6. Bande de roulement selon l'une quelconque des revendications 1 à 5 **caractérisée en ce que** les parties de bord (30) sont dépourvues de toute rainure ou incision d'orientation circonférentielle.

7. Bande de roulement selon l'une quelconque des revendications 1 à 6 **caractérisée en ce que** les incisions transversales (22, 22', 22") sont inclinées dans la profondeur par rapport à la direction radiale (R) avec un même angle moyen A au plus égal à 25 degrés et préférentiellement compris entre 0 degrés et 10 degrés.

8. Bande de roulement selon l'une quelconque des revendications 1 à 7 **caractérisée en ce que** les incisions transversales (22', 22") axialement les plus à l'extérieur de la partie centrale (20) de la bande de roulement sont réparties au tour de roue avec une distance moyenne entre deux incisions successives d'une même série au plus égale à 2% du périmètre du pneu mesuré sur le plan médian équatorial dudit pneu.

9. Bande de roulement selon l'une quelconque des revendications 1 à 8 **caractérisée en ce que** les canaux d'extrémité (221', 221") sont déphasés entre les deux bords de la partie centrale (20).

10. Pneu pourvu d'une bande de roulement selon l'une quelconque des revendications 1 à 9, ce pneu étant destiné à équiper un essieu porteur d'un véhicule poids lourd de type remorque.

## Patentansprüche

1. Laufstreifen (1) eines Reifens, welcher zur Ausrüstung eines Lkw-Anhängers bestimmt ist, wobei dieser Laufstreifen eine Dicke E von abzunutzendem Material aufweist, die eine Abnutzungsgrenze bestimmt, und eine Lauffläche (10) aufweist, um mit einer Fahrbahn in Kontakt zu kommen, wobei dieser Laufstreifen in einen mittleren Teil (20) und Randteile (30) beiderseits des mittleren Teils aufgeteilt ist, wobei die Randteile (30) mit keinem quer verlaufenden Ausschnitt versehen sind, wobei der mittlere Teil (20) mit einem Profilmuster versehen ist, das mit keiner Umfangsrille versehen ist, wobei eine Rille ein Zwischenraum ist, der in dem Laufstreifen zwischen Materialwänden mit einer Tiefe ausgebildet ist, die höchstens gleich der Dicke des Streifens ist, wobei diese Materialwände unter den üblichen Fahrbedingungen des Reifens nicht miteinander in Kontakt kommen, wobei dieses Profilmuster mehrere Einschnitte umfasst, wobei ein Einschnitt ein Zwischenraum ist, der in einem Laufstreifen zwischen Materialwänden mit einer Tiefe ausgebildet ist, die höchstens gleich der Dicke des Streifens ist, wobei diese Wände in der Lage sind, unter üblichen Fahrbedingungen des Reifens wenigstens teilweise miteinander in Kontakt zu kommen, wobei diese mehreren Einschnitte wenigstens einen Umfangseinschnitt (21) und quer verlaufende Einschnitte (22, 22', 22") umfassen, wobei diese letztgenannten, quer verlaufenden Einschnitte eine erste Reihe von seitlichen Einschnitten (22') und eine zweite Reihe von seitlichen Einschnitten (22") umfassen, wobei jede dieser Reihen von seitlichen Einschnitten (22', 22") ein erstes Ende in der Nähe der Mittelebene des Laufstreifens und ein zweites Ende axial außerhalb des ersten Endes umfasst, wobei die zweiten Enden der seitlichen Einschnitte (22', 22") den mittleren Teil des Laufstreifens axial begrenzen, wobei sich jeder seitliche Einschnitt (22', 22") an seinem ersten Ende in einen Umfangseinschnitt (21) öffnet, wobei alle Einschnitte (21, 22) des mittleren Teils des Laufstreifens sich in dem Laufstreifen bis in eine Tiefe erstrecken, die wenigstens gleich 60 % der Dicke E von abzunutzendem Material ist, und im Inneren des Laufstreifens durch verdeckte Kanäle (210, 220) mit Abmessungen verlängert werden, die geeignet sind, das durchgängige Strömungsnetz unter der Lauffläche im Neuzustand (10) zu ergänzen, wobei diese verdeckten Kanäle (210, 220) dazu bestimmt sind, nach einer vorbestimmten teilweisen Abnutzung Rillen zu bilden, wobei dieser Laufstreifen (1) **dadurch gekennzeichnet ist, dass** er in seinem mittleren Teil (20) mit keinerlei Rillen versehen ist, wobei dieser mittlere Teil eine Breite Lc aufweist, die wenigstens 40 % und höchstens 90 % der Gesamtbreite W des Laufstreifens beträgt, und dadurch, dass die seitlichen Einschnitte (22', 22"), die im mittleren Teil des Laufstreifens ausgebildet sind, an ihrem zweiten Ende in einen Endkanal (221', 221") münden, der an der Lauffläche des Laufstreifens offen ist und sich in der Dicke des Streifens verlängert, bis er einen verdeckten Kanal (220', 220") am Einschnittsboden erreicht und somit ein durchgängiges Fluidströmungsnetz zwischen allen Kanälen erzeugt, gleichgültig, ob es sich um Endkanäle (221', 221") oder verdeckte Kanäle (210, 220, 220', 220") handelt.

2. Laufstreifen nach Anspruch 1, **dadurch gekennzeichnet, dass** der mittlere Teil (20) eine Breite Lc aufweist, die wenigstens 80 % der Gesamtbreite W des Laufstreifens beträgt.

3. Laufstreifen nach Anspruch 1 oder Anspruch 2, **dadurch gekennzeichnet, dass** der oberflächenbezogene Hohlraumanteil des Laufstreifens im Neuzustand höchstens 7 % beträgt.

4. Laufstreifen nach einem der Ansprüche 1 bis 3, **dadurch gekennzeichnet, dass** die Endkanäle (221', 221") einen Querschnitt aufweisen, der zwischen dem Querschnitt einer Scheibe mit einem Durchmesser, der 15 % der Breite Lb jedes Randes (30) beträgt, und dem Querschnitt einer Scheibe mit einem Durchmesser, der 25 % der Breite Lb jedes Randes (30) beträgt, liegt.

5. Laufstreifen nach Anspruch 4, **dadurch gekennzeichnet, dass** volumenbezogene Hohlraumanteil des mittleren Teils (20) im Neuzustand so gewählt ist, dass er wenigstens 6 % und höchstens 9 % beträgt, und oberflächenbezogene Hohlraumanteil im Neuzustand wenigstens 2 % und höchstens 6 % beträgt.

6. Laufstreifen nach einem der Ansprüche 1 bis 5, **dadurch gekennzeichnet, dass** die Randteile (30) mit keinerlei Rille oder Einschnitt mit Umfangsausrichtung versehen sind.

7. Laufstreifen nach einem der Ansprüche 1 bis 6, **dadurch gekennzeichnet, dass** die quer verlaufenden Einschnitte (22, 22', 22") in der Tiefe in Bezug auf die radiale Richtung (R) um einen mittleren Winkel A geneigt sind, der höchstens 25 Grad beträgt und vorzugsweise zwischen 0 Grad und 10 Grad liegt.

8. Laufstreifen nach einem der Ansprüche 1 bis 7, **dadurch gekennzeichnet, dass** die axial am weitesten außen befindlichen, quer verlaufenden Einschnitte (22', 22") des mittleren Teils (20) des Laufstreifens um das Rad herum mit einem mittleren Abstand zwischen zwei aufeinander folgenden Einschnitten ein und derselben Reihe verteilt sind, der höchstens 2 % des an der äquatorialen Mittelebene des Reifens gemessenen Umfangs des Reifens beträgt.

9. Laufstreifen nach einem der Ansprüche 1 bis 8, **dadurch gekennzeichnet, dass** die Endkanäle (221', 221") zwischen den zwei Rändern des mittleren Teils (20) verschoben sind.

10. Reifen, welcher mit einem Laufstreifen nach einem der Ansprüche 1 bis 9 versehen ist, wobei dieser Reifen zur Ausrüstung einer Tragachse eines Lastfahrzeugs vom Typ eines Anhängers bestimmt ist.

## Claims

1. Tread (1) for a tyre intended to equip a heavy-duty trailer, this tread having a thickness E of material to be worn away that determines a wear limit and having a tread surface (10) for coming into contact with a road surface, this tread being divided into a central part (20) and edge parts (30) on either side of the central part, the edge parts (30) not having any transverse cuts, the central part (20) being provided with a tread pattern that does not have any circumferential grooves, a groove denoting the space formed in the tread between walls of material to a depth at most equal to the thickness of the tread, these walls of material not coming into contact with one another under the normal running conditions of the tyre, this tread pattern comprising a plurality of sipes, a sipe denoting the space formed in a tread between walls of material to a depth at most equal to the thickness of the tread, said walls being able to come into contact, at least partially, with one another under the normal running conditions of the tyre, this plurality of sipes comprising at least one circumferential sipe (21) and transverse sipes (22, 22', 22"), the latter transverse sipes including a first set of lateral sipes (21') and a second set of lateral sipes (22"), each of these sets of lateral sipes (22', 22") comprising a first end close to the mid-plane of the tread and a second end axially outside the first end, the second ends of the lateral sipes (22', 22") axially delimiting the central part of the tread, each lateral sipe (22', 22") opening at its first end into a circumferential sipe (21), all the sipes (21, 22) of the central part of the tread extending in the tread to a depth at least equal to 60% of the thickness E of material to be worn away and being extended into the tread by hidden channels (210, 220) of appropriate dimensions for supplementing the continuous flow network under the tread surface (10) in the new state, these hidden channels (210, 220) being intended to form grooves after a predetermined amount of partial wear, **this tread** (1) **being characterized in that** it is entirely without grooves in its central part (20), this central part having a width Lc at least equal to 40% and at most 90% of the total width W of the tread, **and in that** the lateral sipes (22', 22") formed in the central part of the tread open at their second end into an end channel (221', 221") that opens onto the tread surface of the tread and continues into the thickness of said tread until it meets a hidden channel (220', 220") at the sipe bottom, and thus creates a continuous fluidic flow network between all the channels, regardless of whether they are end (221', 221") or hidden (210, 220, 220', 220") channels.

2. Tread according to Claim 1 **characterized in that** the central part (20) has a width Lc that is at least equal to 80% of the total width W of the tread.

3. Tread according to Claim 1 or Claim 2 **characterized in that** the surface void ratio of the tread in the new state is at most equal to 7%.

4. Tread according to any one of Claims 1 to 3 **characterized in that** the end channels (221', 221") have a cross-sectional area of between the cross-sectional area of a disc with a diameter equal to 15% of the width Lb of each edge (30) and the cross-sectional area of a disc with a diameter equal to 25% of the width Lb of each edge (30).

5. Tread according to Claim 4 **characterized in that** the volumetric void ratio of the central part (20) in the new state is chosen to be at least equal to 6% and at most equal to 9% and the surface void ratio is at least equal to 2% and at most equal to 6% in the new state.

6. Tread according to any one of Claims 1 to 5 **characterized in that** the edge parts (30) do not have any circumferentially oriented grooves or sipes.

7. Tread according to any one of Claims 1 to 6 **characterized in that** the transverse sipes (22, 22', 22") are inclined in the depth with respect to the radial direction (R) at one and the same angle A at most equal to 25 degrees and preferably between 0 degrees and 10 degrees.

8. Tread according to any one of Claims 1 to 7 **characterized in that** the axially outermost transverse sipes (22', 22") of the central part (20) of the tread are distributed around the wheel at a mean distance between two successive sipes of one and the same set at most equal to 2% of the perimeter of the tyre measured on the equatorial mid-plane of said tyre.

9. Tread according to any one of Claims 1 to 8 **characterized in that** the end cavities (221', 221") are offset between the two edges of the central part (20).

10. Tyre provided with a tread according to any one of Claims 1 to 9, this tyre being intended to be fitted to a load-bearing axle of a heavy-duty vehicle of the trailer type.
